# EUROPEAN PATENT APPLICATION

(11) **EP 4 036 054 A1**
(43) Date of publication of application: **03.08.2022**
(21) Application number: 20869000.8
(22) Date of filing: 18.09.2020
(51) Int. Cl.: C01B 3/22, B01J 31/16, C01B 3/56, C07C 53/02

(54) **HYDROGEN GAS PRODUCTION METHOD AND HYDROGEN GAS PRODUCTION SYSTEM**

(30) Priority: 26.09.2019 JP 2019175963
(71) Applicant: NITTO DENKO CORPORATION, Ibaraki-shi Osaka 567-8680 (JP)
(72) Inventor: KOTAKE Shinya, Ibaraki-shi, Osaka 567-8680 (JP); MATSUDA Hirokazu, Ibaraki-shi, Osaka 567-8680 (JP); HIRANO Makoto, Ibaraki-shi, Osaka 567-8680 (JP); IHARA Terukazu, Ibaraki-shi, Osaka 567-8680 (JP)
(74) Representative: Hoffmann Eitle
(86) International application number: PCT/JP2020/035602
(87) International publication number: WO 2021/060215

(57) **Abstract**

The present disclosure relates to a hydrogen gas production method including: a first step of generating a mixed gas containing hydrogen and carbon dioxide from a hydrogen storage agent by dehydrogenation reaction using a catalyst in a reactor; a second step of purifying the generated mixed gas to acquire a gas having a high hydrogen concentration; a third step of separating a solution in the reactor into a solution enriched with the catalyst and a permeate using a separation membrane unit; and a fourth step of supplying the solution enriched with the catalyst to the reactor for reusing in the first step.

## Description

### TECHNICAL FIELD

The present disclosure relates to a hydrogen gas production method and a hydrogen gas production system.

### BACKGROUND ART

Due to problems such as global warming and fossil fuel depletion, hydrogen energy has been highly expected as next-generation energy. In order to realize a hydrogen energy society, techniques for producing, storing, and utilizing hydrogen are required. However, as for hydrogen storage, there are various problems regarding storage, transportation, safety, cycle, cost and the like.

As hydrogen storage material, various materials such as hydrogen storage alloys, organic hydrides, inorganic hydrides, organic metal complexes, and porous carbon materials has been studied to be developed. Among these, the organic hydrides have attracted attention because of advantages such as ease of handling, high hydrogen storage density, and light weight. Some organic hydrides are considered as hazardous substances, and thus may be used as low-concentration solutions. When extracting hydrogen by dehydrogenation reaction, it is necessary to separate and recover hydrogen with high efficiency.

Patent Literature 1 describes a high-pressure hydrogen gas production method, the method including generating a high-pressure mixed gas containing hydrogen and carbon dioxide from a hydrogen storage agent by dehydrogenation reaction using a catalyst, and performing phase separation on the generated high-pressure mixed gas to produce a high-pressure gas with a high hydrogen concentration. Patent Literature 2 describes a method of separating a homogeneous catalyst out of a reaction mixture by means of a membrane separation unit.

### CITATION LIST

### PATENT LITERATURE

Patent Literature 1: Japanese Patent No. 6502091
Patent Literature 2: Japanese Patent No. 6333360

### SUMMARY OF INVENTION

### TECHNICAL PROBLEM

The technique described in Patent Literature 1 decomposes formic acid in a low-concentration formic acid solution into hydrogen and carbon dioxide using a catalyst, but there is a problem that accumulation of water generated in the reaction solution reduces a catalyst concentration in the formic acid solution and a hydrogen generation rate.

Therefore, the present disclosure provides a hydrogen gas production method and a hydrogen gas production system capable of producing hydrogen gas with high efficiency by concentrating solution in a reactor using a simple method and reusing a solution enriched with a catalyst.

### SOLUTION TO PROBLEM

Means for solving the above problem are as follows.
[1] A hydrogen gas production method, comprising: a first step of generating a mixed gas containing hydrogen and carbon dioxide from a hydrogen storage agent by dehydrogenation reaction using a catalyst in a reactor; a second step of purifying the generated mixed gas to acquire a gas having a high hydrogen concentration; a third step of separating a solution in the reactor into a solution enriched with the catalyst and a permeate using a separation membrane unit; and a fourth step of supplying the solution enriched with the catalyst to the reactor for reusing in the first step.
[2] The hydrogen gas production method according to [1], wherein
   the hydrogen storage agent is at least one selected from formic acid, formate, methanol, ethanol, isopropanol, formaldehyde, acetaldehyde, glyoxal, and glyoxal acid.
[3] The hydrogen gas production method according to [1] or [2], wherein
   the catalyst is an organic metal complex containing at least one transition metal selected from iridium, rhodium, ruthenium, cobalt, osminium, nickel, iron, palladium, platinum, and gold, or a salt of the complex.
[4] The hydrogen gas production method according to any one of [1] to [3], wherein
   a concentration of the hydrogen storage agent in a hydrogen storage agent solution supplied to the reactor is 0.0044% to 78%.
[5] The hydrogen gas production method according to any one of [1] to [4], wherein the separation membrane unit includes a separation membrane, and a pore diameter of the separation membrane is 1 to 50 Å.
[6] The hydrogen gas production method according to [5], wherein
   a surface of the separation membrane is neutrally or positively charged.
[7] The hydrogen gas production method according to any one of [1] to [6], wherein a pressure in the third step is 0 to 3.0 MPa.
[8] A hydrogen gas production system, comprising: a dehydrogenation reaction device that generates a mixed gas containing hydrogen and carbon dioxide from a hydrogen storage agent by dehydrogenation reaction using a catalyst in a reactor; a hydrogen gas purification device that is connected to the dehydrogenation reaction device and purifies the generated mixed gas to acquire a gas having a high hydrogen concentration; and a separation device that is connected to the dehydrogenation reaction device, separates a solution in the reactor into a solution enriched with the catalyst and a permeate using a separation membrane unit and supplies the separated solution enriched with the catalyst to the reactor.
[9] The hydrogen gas production system according to [8], further comprising: a hydrogen storage agent production device that produces the hydrogen storage agent, wherein the dehydrogenation reaction device is connected to the hydrogen storage agent production device.

### ADVANTAGEOUS EFFECTS OF INVENTION

According to the present disclosure, it is possible to provide a hydrogen gas production method and a hydrogen gas production system capable of producing hydrogen gas from a hydrogen storage material with high efficiency.

### BRIEF DESCRIPTION OF DRAWINGS

FIG. 1 is a diagram illustrating an example of a hydrogen gas production system according to an embodiment of the present disclosure.
FIG. 2 is a diagram for explaining a catalyst recovery experiment.
FIG. 3 is a diagram illustrating measured results of change with time in a hydrogen gas generation amount when a recovered catalyst is used.

### DESCRIPTION OF EMBODIMENTS

Hereinafter, an embodiment of the present disclosure will be described in detail.

A hydrogen gas production method according to the embodiment of the present disclosure includes: a first step of generating a mixed gas containing hydrogen and carbon dioxide from a hydrogen storage agent by dehydrogenation reaction using a catalyst in a reactor;
a second step of purifying the generated mixed gas to acquire a gas having a high hydrogen concentration;
a third step of separating a solution in the reactor into a solution enriched with the catalyst and a permeate using a separation membrane unit; and
a fourth step of supplying the solution enriched with the catalyst to the reactor for reusing in the first step.

### [First Step]

The first step is a step of generating a mixed gas containing hydrogen and carbon dioxide from a hydrogen storage agent by dehydrogenation reaction using a catalyst in a reactor. By this step, the mixed gas containing hydrogen is generated in the reactor from a hydrogen storage agent solution containing the hydrogen storage agent supplied to the reactor, and the generated mixed gas can be used in the second step.

Examples of the hydrogen storage agent according to the embodiment of the present disclosure include formic acid, formate, methanol, ethanol, isopropanol, formaldehyde, acetaldehyde, glyoxal, and glyoxal acid. At least one selected from formic acid, formate, methanol, ethanol, isopropanol, formaldehyde, acetaldehyde, glyoxal, and glyoxal acid is preferred, and formic acid or formate is more preferred. These hydrogen storage agents may be used as one kind or a mixture of two or more kinds. These hydrogen storage agents can also be used as a hydrogen storage agent solution in which a hydrogen storage agent is dissolved in a solvent.

The solvent is not particularly limited, and examples thereof include water, ethylene glycol, polyethylene glycol, glycerin, methanol, ethanol, propanol, and pentanol. Water, ethylene glycol, polyethylene glycol, and glycerin are preferred, and water is more preferred.

A concentration of the hydrogen storage agent in the hydrogen storage agent solution is preferably 0.0044 mass% to 78 mass%. For example, when formic acid is used as the hydrogen storage agent and a concentration of formic acid is 78 mass% or less, it does not fall under a legally hazardous substance and is easy to handle. The concentration of formic acid is preferably 0.0044 mass% or more since under this case, the mixed gas can be generated at a sufficient rate. The concentration of the hydrogen storage agent is more preferably 0.044 mass% or more, and further preferably 0.44 mass% or more.

The hydrogen storage agent in the hydrogen storage agent solution may be a synthetically produced hydrogen storage agent or a biologically produced hydrogen storage agent.

When a biologically produced hydrogen storage agent is used, the hydrogen storage agent solution may have a low hydrogen storage agent concentration such as 0.044 mass% to 0.44 mass%.

The catalyst used in the embodiment of the present disclosure may be either a homogeneous catalyst or a heterogeneous catalyst, and it is preferable to use a homogeneous catalyst from the viewpoint of conversion efficiency to product.

When a homogeneous catalyst is used, it is usually difficult to recover the catalyst. However, in the hydrogen gas production method according to the embodiment of the present disclosure, even in a reaction solution using a homogeneous catalyst, the catalyst can be recovered and reused as a solution enriched with the catalyst by extracting the solution containing the catalyst in the reactor and concentrating the solution in the third step.

Here, the solution enriched with the catalyst is a solution that remains without penetrating a separation membrane in the third step, and has a higher catalyst concentration than that of the solution in the reactor before being supplied to the third step.

The catalyst used in the embodiment of the present disclosure is preferably an organic metal complex containing at least one transition metal selected from iridium, rhodium, ruthenium, cobalt, osminium, nickel, iron, palladium, platinum, and gold, or a salt of the complex. Among these, iridium is more preferred from the viewpoint that water can be used as a solvent, no carbon monoxide as a by-product is contained in the mixed gas, dehydrogenation reaction occurs at 100°C or lower, and dehydrogenation reaction occurs even under high pressure of 10 MPa or more.

In the organic metal complex containing a transition metal (transition metal complex), counter ions thereof are not particularly limited. Examples of anions include hexafluorophosphate ions (PF₆⁻), tetrafluoroborate ions (BF₄⁻), hydroxide ions (OH⁻), acetate ions, carbonate ions, phosphate ions, sulfate ions, nitrate ions, halide ions (for example, fluoride ions (F⁻), chloride ions (Cl⁻), bromide ions (Br⁻), iodide ions (I⁻), and the like), hypohalous acid ions (for example, hypofluorous acid ions, hypochlorous acid ions, hypobromous acid ions, hypoiodous acid ions, and the like), halous acid ions (for example, fluorous acid ions, chlorous acid ions, bromous acid ions, iodous acid ions, and the like), halogen acid ions (for example, fluoric acid ions, chloric acid ions, bromic acid ions, iodic acid ions, and the like), perhalogen acid ions (for example, perfluoric acid ions, perchloric acid ions, perbromic acid ions, periodic acid ions, and the like), trifluoromethanesulfonic acid ions (OSO₂CF₃⁻), and tetrakis pentafluorophenylborate ions (B(C₆F₅)₄⁻).

Cations are not particularly limited, and examples thereof include various metal ions such as lithium ion, magnesium ion, sodium ion, potassium ion, calcium ion, barium ion, strontium ion, yttrium ion, scandium ion, and lanthanoid ion, ammonium ion, tetramethylammonium, and tetraethylammonium. These counter ions may be used alone or in combination of two or more kinds.

As the catalyst used in the embodiment of the present disclosure, a commercially available catalyst can be used, and a catalyst produced by a known method or the like can also be used. The known method includes a method described in JP-A-2018-114495, and a method described in Chem. Eur. J. 2008, 14, 11076-11081 written by Yuichiro Himeda; Nobuko Onozawa-Komatsuzaki; Satoru Miyazawa; Hideki Sugihara; Takuji Hirose; and Kazuyuki Kasuga.

An amount of the catalyst to be used is not particularly limited as long as the hydrogen can be produced. From the viewpoint of a rate of the dehydrogenation reaction, the amount of the catalyst to be used is preferably 0.00035 mass% or more, more preferably 0.0035 mass% or more, and still more preferably 0.035 mass% or more with respect to the solvent of the hydrogen storage agent solution. From the viewpoint of catalyst durability, the amount of the catalyst to be used is preferably 10 mass% or less, more preferably 3.5 mass% or less, and further preferably 0.35 mass% or less with respect to the solvent of the hydrogen storage agent solution.

When two or more kinds of catalysts are used, a total amount of the catalysts to be used may be within the above range.

Although the catalyst concentration in the reactor may change, in the hydrogen gas production method according to the embodiment of the present disclosure, since the solution enriched with the catalyst acquired in the third step described later is supplied into the reactor and reused, it is easy to keep the catalyst concentration constant.

A solvent may be used for the dehydrogenation reaction according to the embodiment of the present disclosure. The solvent is preferably a solvent that dissolves the catalyst and makes uniform, and is not particularly limited. Examples thereof include water, ethylene glycol, polyethylene glycol, glycerin, methanol, ethanol, propanol, and pentanol. Water, ethylene glycol, polyethylene glycol, and glycerin are more preferable, and water is still more preferable.

The dehydrogenation reaction is a reaction in which the mixed gas containing hydrogen and carbon dioxide is generated from the hydrogen storage agent using the catalyst.

Reaction conditions of the dehydrogenation reaction are not particularly limited and can be appropriately adjusted depending on types of the hydrogen storage agent and the catalyst used. The reaction conditions can also be changed as appropriate during the reaction process. A form of the reactor used for the reaction is also not particularly limited.

A reaction temperature is not particularly limited, but is preferably 50°C or higher, more preferably 55°C or higher, and still more preferably 60°C or higher, in order to allow the reaction to proceed efficiently. From the viewpoint of energy efficiency, the reaction temperature is preferably 200°C or lower, more preferably 100°C or lower, and still more preferably 90°C or lower.

A reaction time is not particularly limited, but is, for example, preferably 0.5 hours or more, more preferably 1 hour or more, and still more preferably 2 hours or more from the viewpoint of sufficiently securing an amount of hydrogen to be generated. From the viewpoint of cost, the reaction time is preferably 24 hours or less, more preferably 12 hours or less, and still more preferably 6 hours or less.

A pressure in the reaction is not particularly limited, and is, for example, preferably 0.1 MPa or more from the viewpoint of sufficiently securing the amount of hydrogen to be generated. From the viewpoint of durability of a hydrogen storage tank, the pressure is preferably 100 MPa or less, more preferably 85 MPa or less, and still more preferably 70 MPa or less.

A method for introducing the hydrogen storage agent, catalyst, solvent, and the like used in the reaction into the reactor is not particularly limited. All the raw materials and the like may be introduced collectively, some or all the raw materials may be introduced stepwise, or some or all the raw materials may be introduced continuously. An introduction method that combines all of these methods may be used.

When the hydrogen storage agent solution is continuously introduced, in consideration of balance with a rate of the dehydrogenation reaction, a supply rate of the hydrogen storage agent in the hydrogen storage agent solution is preferably 0.05 mmol/L/min or more, more preferably 0.1 mmol/L/min or more, and still more preferably 0.5 mmol/L/min or more. From the viewpoint of reducing catalyst deterioration, the supply rate of the hydrogen storage agent is preferably 10 mmol/L/min or less, more preferably 5.0 mmol/L/min or less, and still more preferably 2.5 mmol/L/min or less.

### [Second Step]

The second step is a step of purifying the mixed gas generated in the first step to acquire a gas having a high hydrogen concentration. In the second step, the mixed gas generated in the first step can be separated into a gas containing hydrogen gas and carbon dioxide.

A kind of purification of the mixed gas is not particularly limited, and examples thereof include purification using gas separation membrane, purification by gas-liquid separation, and purification by the PSA method.

The separated and recovered carbon dioxide can be used for formic acid production.

### [Third Step]

The third step is a step of separating a solution (hereinafter, may be referred to as a residual solution) in the reactor into a solution enriched with the catalyst and a permeate using a separation membrane unit.

The solution in the reactor contains the hydrogen storage agent, the solvent, and the catalyst which remain in the reactor other than hydrogen and carbon dioxide generated by the dehydrogenation reaction in the first step.

For example, when formic acid is used as the hydrogen storage agent and water is used as the solvent, hydrogen and carbon dioxide are generated by the dehydrogenation reaction, the mixed gas containing hydrogen and carbon dioxide is extracted from the reactor for use in the second step, and water and unreacted formic acid remain in the reactor.

According to the hydrogen gas production method according to the embodiment of the present disclosure, by performing the third step, the expensive catalyst can be recovered and reused while maintaining catalytic activity. Therefore, the dehydrogenation reaction can be performed without lowering the catalyst concentration in the solution, and excellent productivity can be obtained.

If the dehydrogenation reaction is repeated or continuously performed in the absence of the third step, accumulation of the solvent remaining in the reactor reduces the catalyst concentration in the residual solution. Then, the hydrogen production rate decreases due to decrease in the catalyst concentration in the residual solution.

The solution enriched with the catalyst separated by the third step contains the catalyst, the solvent, and the unreacted hydrogen storage agent.

The solution enriched with the catalyst (catalyst solution) separated by the third step can be reused in the first step as a reaction solution for the dehydrogenation reaction. Catalysts are usually less durable, and it is difficult to maintain the catalytic activity when separating the catalyst solution. However, since the separation in the third step according to the embodiment of the present disclosure uses the separation membrane unit, it is easy to separate the permeate and the catalyst solution and concentrate the catalyst solution, possible to prevent the catalytic activity from decreasing, and possible to reuse the catalyst solution in the first step.

The permeate separated by the third step contains a solution in which the catalyst is diluted.

A concentration of the catalyst contained in the permeate can be measured by, for example, an inductively coupled plasma (ICP) emission spectrometer. If a concentration of the catalyst contained in the permeate is lower than the concentration of the catalyst in the solution in the reactor, it can be said that the solution remaining without permeating the separation membrane in the third step is enriched with the catalyst.

When formic acid is used as the hydrogen storage agent and water is used as the solvent, the permeate is almost water and may be reused for formic acid production.

The separation membrane unit according to the embodiment of the present disclosure includes the separation membrane.

The separation membrane in the separation membrane unit may be housed in a housing, and examples thereof include a plate frame type flat membrane, a pleated type flat membrane, and a spiral type flat membrane.

The separation membrane is not particularly limited as long as it is difficult for the catalyst to permeate and does not affect the catalytic activity, and may be a reverse osmosis membrane (RO membrane), nanofiltration membrane (NF membrane), microfiltration membrane (MF membrane), or a ultrafiltration membrane (UF membrane). The separation membrane is preferably an RO membrane or an NF membrane from the viewpoint of size of a pore diameter.

From the viewpoint of a solution permeation rate, the pore diameter of the separation membrane is preferably 1 Å or more, more preferably 2 Å or more, and still more preferably 5 Å or more. From the viewpoint of a catalyst recovery rate, the pore diameter is preferably 50 Å or less, more preferably 20 Å or less, and still more preferably 10 Å or less.

A surface of the separation membrane preferably is neutrally or positively charged. When the surface of the separation membrane is neutrally or positively charged, it is possible to prevent loss of catalytic activity and trapping of the catalyst by the separation membrane, and it is easy to obtain a high-concentration catalyst solution.

Commercially available products can be used as the separation membrane, and examples thereof include Nano-SW manufactured by Nitto Denko Corporation, PRO-XS1 manufactured by Nitto Denko Corporation, and ESPA-DSF manufactured by Nitto Denko Corporation. It is preferable to use Nano-SW manufactured by Nitto Denko Corporation, PRO-XS1 manufactured by Nitto Denko Corporation, or ESPA-DSF manufactured by Nitto Denko Corporation.

The third step can be performed using, for example, a separation device provided with a pressure resistant container under a normal pressure or an increased pressure. The pressure in the third step can be adjusted by introducing an inert gas such as nitrogen gas into the pressure resistant container from a cylinder connected to the pressure resistant container.

From the viewpoint of the solution permeation rate, the pressure in the third step is more preferably 0.1 MPa or more, and still more preferably 0.3 MPa or more. From the viewpoint of energy cost due to membrane separation, the pressure is preferably 3.0 MPa or less, more preferably 1.5 MPa or less, and still more preferably 0.75 MPa or less.

### [Fourth Step]

The fourth step is a step of supplying the solution enriched with the catalyst to the reactor for reusing in the first step.

As described above, since the catalytic activity is maintained, the catalyst solution separated in the third step can be reused in the first step as a part of the reaction solution for the dehydrogenation reaction.

The catalyst solution may be merged with, for example, a supply path for supplying the hydrogen storage agent solution to the reactor, or may be introduced directly into the reactor.

When reusing the catalyst solution separated in the third step, it is preferable to replenish the hydrogen storage agent lost due to the dehydrogenation reaction in the first step.

In the solution used in the first step, a ratio of the catalyst solution separated in the third step to be used is not particularly limited, and a part of the solution may be the catalyst solution separated in the third step, or all of the solution may be the catalyst solution separated in the third step, but the ratio is preferably 66 mass% or more, and more preferably 80 mass% or more, and is preferably as high as possible from the viewpoint of catalyst cost.

### [Hydrogen Gas Production System]

A hydrogen gas production system according to the embodiment of the present disclosure includes:
a dehydrogenation reaction device that generates the mixed gas containing hydrogen and carbon dioxide from the hydrogen storage agent by dehydrogenation reaction using the catalyst in the reactor;
a hydrogen gas purification device that is connected to the dehydrogenation reaction device and purifies the generated mixed gas to acquire the gas having a high hydrogen concentration; and
a separation device that is connected to the dehydrogenation reaction device, and separates the solution in the reactor into the solution enriched with the catalyst and the permeate using the separation membrane unit, and supplies the separated solution enriched with the catalyst to the reactor.

The hydrogen gas production system according to the embodiment of the present disclosure further includes a hydrogen storage agent production device that produces the hydrogen storage agent, and the dehydrogenation reaction device may be connected to the hydrogen storage agent production device.

The hydrogen gas production system according to the embodiment of the present disclosure may further include a flow path for supplying the solution in the reactor in the dehydrogenation reaction device to the separation device from the reactor in the dehydrogenation reaction device, and a flow path for supplying the solution enriched with the catalyst separated by the separation device to the reactor.

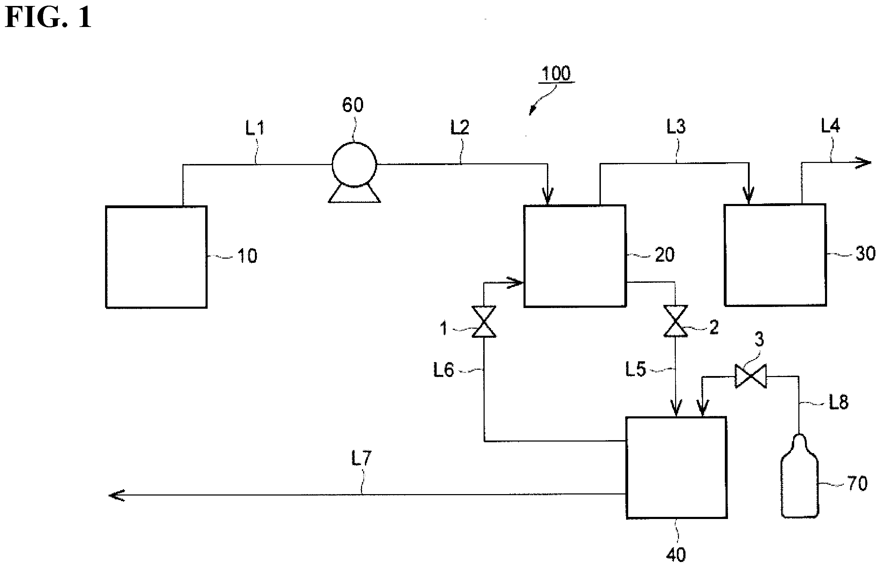

FIG. 1 is a diagram illustrating an example of the hydrogen gas production system according to the embodiment of the present disclosure.

A hydrogen gas production system 100 illustrated in FIG. 1 includes a hydrogen storage agent production device 10, a dehydrogenation reaction device 20, a hydrogen gas purification device 30, and a separation device 40, and may further include a feed pump 60 that feeds the hydrogen storage agent solution to the dehydrogenation reaction device 20, and a cylinder 70 that adjusts a pressure in the separation device 40. The pressure can be adjusted by a valve 3 provided in the flow path L8.

The hydrogen gas production system 100 may further include a flow path L1 for circulating the hydrogen storage agent solution to the feed pump 60, a flow path L2 for supplying the hydrogen storage agent solution from the feed pump 60 to the reactor provided in the dehydrogenation reaction device 20, a flow path L3 for supplying the mixed gas generated by the dehydrogenation reaction device 20 to the hydrogen gas purification device 30, and a flow path L4 for recovering hydrogen gas with high hydrogen concentration by purification.

The hydrogen gas production system 100 may further include a flow path L5 for extracting the solution in the reactor from the reactor provided in the dehydrogenation reaction device 20 and circulating the solution to the separation device 40, a flow path L6 for supplying the catalyst solution separated by the separation device 40 to the dehydrogenation reaction device 20, and a flow path L7 for recovering the permeate separated by the separating device 40.

The flow path L5 may include a valve 2, which can adjust an amount of the solution that is extracted from the reactor and circulated to the separation device 40.

The flow path L6 may include a valve 1, which can adjust an amount of the catalyst solution supplied to the dehydrogenation reaction device 20.

According to the hydrogen gas production method and the hydrogen gas production system of the present embodiment, since the solution in the reactor can be separated into the catalyst solution by a simple operation, the expensive catalyst can be reused and hydrogen gas can be efficiently produced.

### [Examples]

Hereinafter, the present disclosure will be specifically described with reference to Examples, but the present disclosure is not limited to these Examples.

### [Catalyst Recovery Experiment]

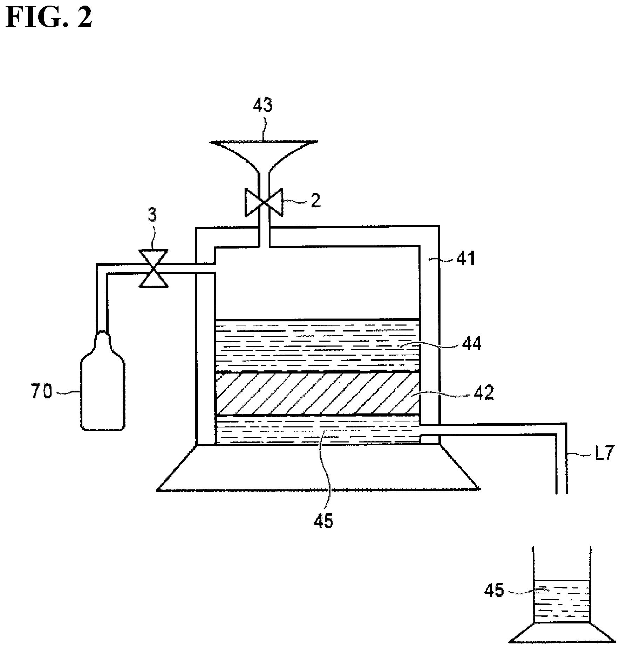

First, as shown in FIG. 2, a flat membrane-like separation membrane 42 shown in Table 1 was provided under the pressure resistant container 41 to which the cylinder 70 (nitrogen cylinder) was connected. From a liquid inlet 43 of the pressure resistant container 41, 300 mL of a test liquid containing water and a 0.5 mmol/L iridium catalyst was charged. The valve 2 of the liquid inlet 43 was closed, the valve 3 of the cylinder 70 was opened, and nitrogen gas was introduced until the pressure in the pressure resistant container 41 reached approximately 0.75 MPa.

100 mL of the permeate 45 that permeated the separation membrane 42 was recovered. Approximately 200 mL of a solution (catalyst solution) 44 remaining in the container without permeating the separation membrane 42 was recovered.

### (Catalyst Concentration)

The catalyst concentration in the permeate that permeated each separation membrane shown in Table 1 was measured by inductively coupled plasma-mass spectrometry (ICP-MS).

**[Table 1]**

| Separation membrane type | No membrane | NANO-SW | PRO-XS1 | ESPA-DSF |
|---|---|---|---|---|
| Membrane type | - | NF | NF | RO |
| Surface charges | - | Neutral | Positive | Neutral |
| Catalyst concentration (mmol/L) | 0.5 | 0.00013 | 0.00031 | 0.0012 |

NANO-SW: manufactured by Nitto Denko Corporation
PRO-XS 1: manufactured by Nitto Denko Corporation
ESPA-DSF: manufactured by Nitto Denko Corporation

With the NF membrane and the RO membrane, the catalyst could be recovered from the residual solution as a high-concentration catalyst solution.

### (Catalytic Activity Test of Recovered Catalyst)

The catalytic activity in the catalyst solution recovered above was confirmed by conducting a catalytic activity test by the following method.

A gas meter was connected to the reactor, and 30 ml of a reaction solution obtained by mixing the catalyst solution recovered above and ion-exchanged water at a volume ratio of 2:1 was charged into the reactor heated to 90°C by a hot plate, and formic acid as the hydrogen storage agent was added so that its concentration reached 0.5 mol/L. The reaction solution using the above test solution was described as Ref.

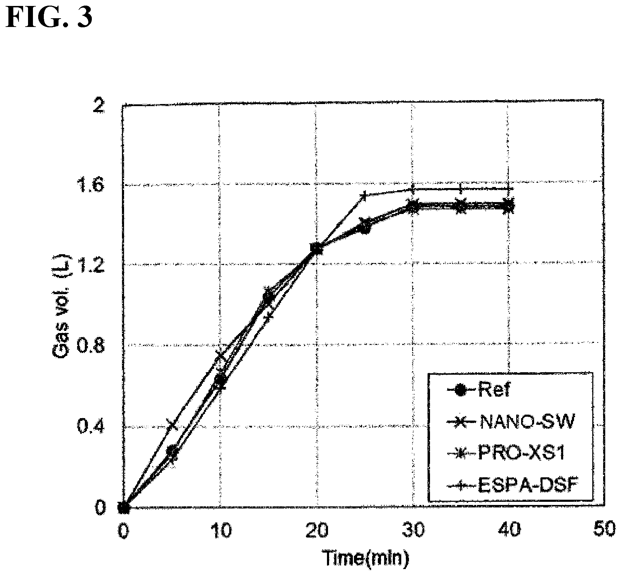

Table 2 and FIG. 3 show measurement results of change with time in a hydrogen gas generation amount measured by the gas meter.

**[Table 2]**

| Time (min) | | Gas vol. (L) | | |
|---|---|---|---|---|
| | Ref | NANO-SW | ESPA-DSF | PRO-XS1 |
| 0 | 0 | 0 | 0 | 0 |
| 5 | 0.28 | 0.41 | 0.24 | 0.27 |
| 10 | 0.64 | 0.75 | 0.59 | 0.67 |
| 15 | 1.04 | 1.00 | 0.94 | 1.07 |
| 20 | 1.28 | 1.28 | 1.27 | 1.27 |
| 25 | 1.38 | 1.41 | 1.54 | 1.40 |
| 30 | 1.48 | 1.49 | 1.57 | 1.47 |
| 35 | 1.48 | 1.49 | 1.57 | 1.47 |
| 40 | 1.48 | 1.49 | 1.57 | 1.47 |

From Table 2 and FIG. 3, it was clarified that formic acid can be decomposed to produce hydrogen gas by the catalyst solution recovered above. Therefore, it is clear that the catalytic activity in the catalyst solution is maintained and the recovered catalyst solution can be reused.

Although the present disclosure has been described in detail with reference to particular embodiments, it will be apparent to those skilled in the art that various changes and modifications can be made without departing from the spirit and scope of the disclosure.

The present application is based on Japanese Patent Application No. 2019-175963 filed on September 26, 2019, the contents of which are incorporated herein as reference.

### INDUSTRIAL APPLICABILITY

The hydrogen gas production method and the hydrogen gas production system according to the embodiment of the present disclosure are capable of producing hydrogen gas with high efficiency by concentrating the solution in the reactor using a simple method and reusing the solution enriched with the catalyst.

### REFERENCE SIGNS LIST

100: hydrogen gas production system
1, 2, 3: valve
10: hydrogen storage agent production device
20: dehydrogenation reaction device 20
30: hydrogen gas purification device
40: separation device
60: feed pump
70: cylinder
L1, L2, L3, L4, L5, L6, L7, L8: flow path
41: pressure resistant container
42: separation membrane
43: liquid inlet
44: catalyst solution
45: permeate

## Claims

1. A hydrogen gas production method, comprising:
a first step of generating a mixed gas containing hydrogen and carbon dioxide from a hydrogen storage agent by dehydrogenation reaction using a catalyst in a reactor;
a second step of purifying the generated mixed gas to acquire a gas having a high hydrogen concentration;
a third step of separating a solution in the reactor into a solution enriched with the catalyst and a permeate using a separation membrane unit; and
a fourth step of supplying the solution enriched with the catalyst to the reactor for reusing in the first step.

2. The hydrogen gas production method according to claim 1, wherein
the hydrogen storage agent is at least one selected from formic acid, formate, methanol, ethanol, isopropanol, formaldehyde, acetaldehyde, glyoxal, and glyoxal acid.

3. The hydrogen gas production method according to claim 1 or 2, wherein
the catalyst is an organic metal complex containing at least one transition metal selected from iridium, rhodium, ruthenium, cobalt, osminium, nickel, iron, palladium, platinum, and gold, or a salt of the complex.

4. The hydrogen gas production method according to any one of claims 1 to 3, wherein
a concentration of the hydrogen storage agent in a hydrogen storage agent solution supplied to the reactor is 0.0044% to 78%.

5. The hydrogen gas production method according to any one of claims 1 to 4, wherein
the separation membrane unit includes a separation membrane, and a pore diameter of the separation membrane is 1 to 50 Å.

6. The hydrogen gas production method according to claim 5, wherein
a surface of the separation membrane is neutrally or positively charged.

7. The hydrogen gas production method according to any one of claims 1 to 6, wherein
a pressure in the third step is 0 to 3.0 MPa.

8. A hydrogen gas production system, comprising:
a dehydrogenation reaction device that generates a mixed gas containing hydrogen and carbon dioxide from a hydrogen storage agent by dehydrogenation reaction using a catalyst in a reactor;
a hydrogen gas purification device that is connected to the dehydrogenation reaction device and purifies the generated mixed gas to acquire a gas having a high hydrogen concentration; and
a separation device that is connected to the dehydrogenation reaction device, separates a solution in the reactor into a solution enriched with the catalyst and a permeate using a separation membrane unit and supplies the separated solution enriched with the catalyst to the reactor.

9. The hydrogen gas production system according to claim 8, further comprising:
a hydrogen storage agent production device that produces the hydrogen storage agent, wherein
the dehydrogenation reaction device is connected to the hydrogen storage agent production device.
